# EUROPEAN PATENT APPLICATION

(11) **EP 4 621 012 A1**
(43) Date of publication of application: **24.09.2025**
(21) Application number: 23891604.3
(22) Date of filing: 15.11.2023
(51) Int. Cl.: C08L 101/00, C08K 5/13, C08K 7/02, C08K 7/06, C08K 7/14, C08L 97/00

(54) **RESIN COMPOSITION, FIBER-REINFORCED RESIN COMPOSITION AND MOLDED BODY**

(30) Priority: 18.11.2022 JP 2022185076
(71) Applicant: Idemitsu Kosan Co.,Ltd., Tokyo 100-8321 (JP)
(72) Inventor: SUDO, Ken, Tokyo 100-8321 (JP); KOYAMA, Yoshihito, Tokyo 100-8321 (JP); ARAI, Naoko, Tokyo 100-8321 (JP); MURATA, Mitsuko, Tokyo 100-8321 (JP); TOI, Hiroyuki, Tokyo 100-8321 (JP)
(74) Representative: Gille Hrabal Partnerschaftsgesellschaft mbB Patentanwälte
(86) International application number: PCT/JP2023/041060
(87) International publication number: WO 2024/106457

(57) **Abstract**

A resin composition including a lignin component (A) having an alcoholic hydroxy group with the amount thereof of 1.5 mmol/g or less, and a thermoplastic resin (B), wherein the amount of the lignin component (A) is 1 to 60% by mass, and the amount of the thermoplastic resin (B) is 40 to 99% by mass.

## Description

### Technical Field

The present invention relates to a resin composition, a fiber-reinforced resin composition and a molded body.

Specifically, the present invention relates to a resin composition having excellent moldability and mechanical properties, a fiber-reinforced resin composition and a molded body.

### Background Art

In recent years, the application of material to carbon neutral is required worldwide, and it is not an exception in resins.

Polylactic acid (PLA), polybutylene succinate (PBS), PBAT (polybutylene adipate terephthalate), polyamide 610 (PA610), polyamide 11 (PA11) and the like are known as bio-based thermoplastic resins, but they have insufficient physical properties, or they are expensive. As a result, they have not been sufficiently spread.

On the other hand, lignin is known as a biomass material derived from plants. Patent Document 1 discloses a resin composition including a thermoplastic resin and lignin, wherein the thermoplastic resin and the lignin are compatible with each other.

### Related Art Documents

### Patent Documents

[Patent Document 1] JP 2010-163481 A

### Summary of the Invention

However, in the related art including Patent Document 1, there is room for further improvement from the viewpoint of enhancing the moldability and mechanical properties of the resin composition.

An object of the present invention is to provide a resin composition having excellent moldability and mechanical properties, a fiber-reinforced resin composition and a molded body.

As a result of intensive studies, the inventors have found that a resin composition including the specific lignin component and thermoplastic resin at the specific amounts is excellent in moldability and mechanical properties, and have completed the present invention. According to the present invention, the following resin composition and the like can be provided.
1. A resin composition comprising a lignin component (A) having an alcoholic hydroxy group with the amount thereof of 1.5 mmol/g or less, and a thermoplastic resin (B),
   wherein the amount of the lignin component (A) is 1 to 60% by mass, and
   the amount of the thermoplastic resin (B) is 40 to 99% by mass.
2. The resin composition according to 1, wherein the total amount of the alcoholic hydroxy group and a carboxyl group of the lignin component (A) is 1.6 mmol/g or less.
3. The resin composition according to 1 or 2, wherein the amount of a phenolic hydroxy group of the lignin component (A) is 2.5 mmol/g or more, and the ratio of the amount of the phenolic hydroxy group to the amount of the alcoholic hydroxy group (the amount of the phenolic hydroxy group/the amount of the alcoholic hydroxy group) is 2.5 or more.
4. The resin composition according to any one of 1 to 3, wherein the weight average molecular weight (Mw) of the lignin component (A) is 1,000 to 3,500.
5. The resin composition according to any one of 1 to 4, wherein the softening point of the lignin component (A) is 100°C or more and less than 250°C.
6. The resin composition according to any one of 1 to 5, wherein the lignin component (A) comprises two or more compounds represented by the following formula (1), and the total amount of the compounds represented by the formula (1) is 0.06% by mass or more based on the total amount of the lignin component (A): 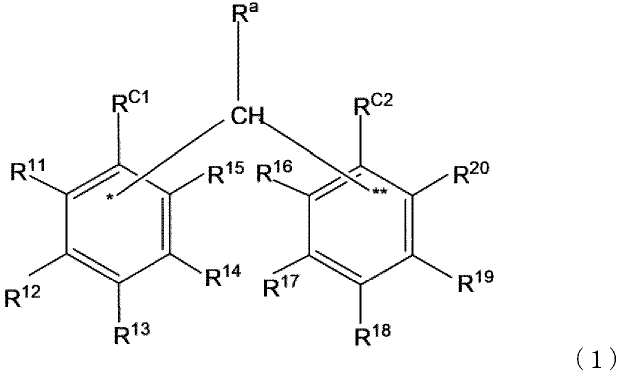 wherein in the formula, * is bonded with the carbon atom in which any of R¹¹ to R¹⁵ is substituted and which is on the ring, and ** is bonded with the carbon atom in which any of R¹⁶ to R²⁰ is substituted and which is on the ring; R^{a} is a hydrogen atom, a methyl group, an ethyl group, a furyl group, a hydroxymethylfuryl group, a hydroxyphenyl group, a hydroxymethoxyphenyl group or a hydroxydimethoxyphenyl group; R^{c1} and R^{c2} are independently a hydroxy group, an alkoxy group, an amino group or a thiol group; R¹¹ to R²⁰ which do not bond with * or ** are independently a hydrogen atom, a hydroxy group, a hydrocarbon group having 1 to 15 carbon atoms, a hydrocarbon ether group having 1 to 15 carbon atoms, or a group containing a carbonyl group; R¹¹ to R²⁰ may be the same as or different from each other; provided that at least one of R¹¹ to R¹⁵ is a hydrogen atom, and at least one of R¹⁶ to R²⁰ is a hydrogen atom.
7. The resin composition according to any one of 1 to 6, wherein a maximum value of a peak of a differential distribution value (dw/dLogM) present in a molecular weight LogM2.35 to 2.60 of the lignin component (A) as measured by gel permeation chromatography (GPC) is 50 or more and 150 or less, or a difference of an integral distribution value (%) in a molecular weight LogM2.35 to 2.55 is 5 or more and 15 or less.
8. The resin composition according to any one of 1 to 7, wherein the thermoplastic resin (B) comprises a condensation polymerization polymer.
9. The resin composition according to any one of 1 to 8, wherein the thermoplastic resin (B) comprises one or more members selected from the group consisting of a polyamide resin, a polyester resin and a polycarbonate resin.
10. A fiber-reinforced resin composition comprising the resin composition according to any one of 1 to 9, and a reinforced fiber (D).
11. The fiber-reinforced resin composition according to 10, wherein the reinforced fiber (D) comprises one or more members selected from the group consisting of a carbon fiber, a glass fiber, an aramid fiber and a cellulose fiber.
12. A molded body comprising the resin composition according to any one of 1 to 9, or the fiber-reinforced resin composition according to 10 or 11.
13. The molded body according to 12, which is an injection-molded body.
14. The molded body according to 12, which is an extrusion-molded body.
15. The molded body according to 12, which is a press-molded body.

According to the present invention, there can be provided a resin composition having excellent moldability and mechanical properties, a fiber-reinforced resin composition and a molded body.

### Mode for Carrying out the Invention

Hereinafter, a resin composition, a fiber-reinforced resin composition and a molded body of the present invention will be described in detail.

The expression "x to y" as used herein represents the numerical range of "x or more, y or less". An upper limit value and a lower limit value described for the numerical range may be arbitrarily combined.

### 1. Resin composition (C)

A resin composition (C) according to an aspect of the present invention includes
a lignin component (A) having an alcoholic hydroxy group with the amount thereof of 1.5 mmol/g or less, and a thermoplastic resin (B),
wherein the amount of the lignin component (A) is 1 to 60% by mass, and
the amount of the thermoplastic resin (B) is 40 to 99% by mass.

According to the resin composition (C) of the present aspect, an effect of excellent moldability and mechanical properties can be obtained.

The reason for the effect is not entirely clear, but the interaction (chemical reaction) between the polar functional group of the lignin component (A) and the thermoplastic resin (B), and the like is presumed.

The resin composition disclosed in Patent Document 1 described above does not satisfy the conditions of the present invention since the structure therein is different from that of the lignin component (A).

Each amount of the alcoholic hydroxy group of the lignin component (A), and the phenolic hydroxy group thereof and the carboxyl group thereof described later is the value measured by the method described in Examples.

### (Lignin component (A))

The lignin component (A) may be, for example as described later, an extract (extracted lignin) obtained by extracting and purifying from a lignin-containing material with a solvent containing an organic solvent. The lignin component (A) typically includes lignin as a main component, and for example, the amount of the lignin may be 90% by mass or more, 95% by mass or more, or 99% by mass or more.

The lignin component (A) includes at least lignin, and it may further include other components. The other components may be components derived from the above-described extracting operation, and specific examples thereof include a compound represented by the formula (1) described later, a compound represented by the formula (2) described later and a free phenolic monomer. The lignin component (A) may include one or more members selected from the group consisting of the other components listed here (compound represented by the formula (1) described later, compound represented by the formula (2) described later and free phenolic monomer), or it may not include any of these other components. A component other than the lignin and the other components listed here (compound represented by the formula (1) described later, compound represented by the formula (2) described later and the free phenolic monomer) is typically regarded as no one falling under the lignin component (A). Provided that it is not excluded that a component not falling under the lignin component (A) is included in the resin composition (C) together with the lignin component (A).

In one embodiment, the amount of the alcoholic hydroxy group of the lignin component (A) is 1.5 mmol/g or less, 1.3 mmol/g or less, or 1.0 mmol/g or less.

In one embodiment, the total amount of the alcoholic hydroxy group and a carboxyl group of the lignin component (A) is 1.6 mmol/g or less, 1.3 mmol/g or less, or 1.0 mmol/g or less. As a result, excellent processing stability can be exhibited.

In one embodiment, the amount of a phenolic hydroxy group of the lignin component (A) is 2.5 mmol/g or more, 3.0 mmol/g or more, or 3.5 mmol/g or more, and the ratio of the amount of the phenolic hydroxy group to the amount of the alcoholic hydroxy group (the amount of the phenolic hydroxy group/the amount of the alcoholic hydroxy group) is 2.5 or more, 3.0 or more, or 3.5 or more. As a result, both of moldability and mechanical properties can be achieved.

The upper limit of the amount of the phenolic hydroxy group is not particularly limited, and it is, for example, 10 mmol/g or less.

The upper limit of the ratio of the amount of the phenolic hydroxy group to the amount of the alcoholic hydroxy group is not particularly limited, and it is, for example, 20 or less.

In one embodiment, the weight average molecular weight (Mw) of the lignin component (A) is 1,000 to 3,500. Mw may be 1,200 or more, and it may be 1,500 or more. Mw may be 3,000 or less, it may be 2,800 or less, it may be 2,500 or less, and it may be 2,200 or less. In one embodiment, the weight average molecular weight (Mw) of the lignin component (A) is 1,000 to 3,500, 1,000 to 3,000, 1,200 to 2,800, 1,500 to 2,500, or 1,500 to 2,200. As a result, more excellent moldability can be exhibited.

In one embodiment, the molecular weight distribution (Mw/Mn) of the lignin component (A) is 2.2 to 3.5. Mw/Mn may be 2.3 or more, it may be 2.4 or more, it may be 2.5 or more, and it may be 2.6 or more. Mw/Mn may be 3.3 or less, it may be 3.0 or less, and it may be 2.7 or less.

Each molecular weight of the lignin component (A) is measured by GPC in the same manner as in those described in Examples described later.

In one embodiment, the softening point of the lignin component (A) is 100°C or more and less than 250°C, 100°C or more and less than 220°C, 100°C or more and less than 200°C, 100°C or more and less than 180°C, 100°C or more and less than 165°C, 110°C or more and less than 165°C, or 110°C or more and 150°C or less. As a result, excellent moldability can be exhibited.

In one embodiment, the lignin component (A) includes two or more compounds (sometimes referred to as "phenol dimer") represented by the following formula (1), and the total amount of the compounds represented by the formula (1) is 0.06% by mass or more based on the total amount of the lignin component (A): 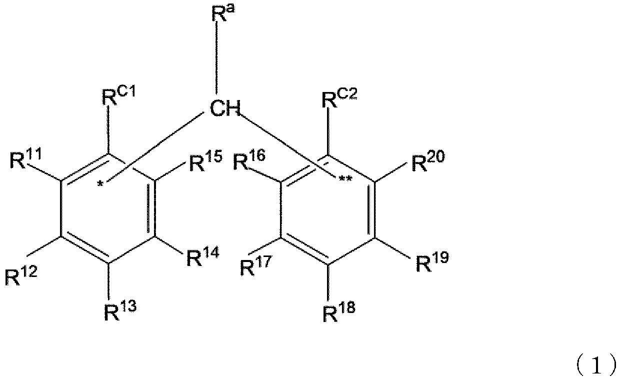 wherein in the formula, * is bonded with the carbon atom in which any of R¹¹ to R¹⁵ is substituted and which is on the ring, and ** is bonded with the carbon atom in which any of R¹⁶ to R²⁰ is substituted and which is on the ring; R^{a} is a hydrogen atom, a methyl group, an ethyl group, a furyl group, a hydroxymethylfuryl group, a hydroxyphenyl group, a hydroxymethoxyphenyl group or a hydroxydimethoxyphenyl group; R^{c1} and R^{c2} are independently a hydroxy group, an alkoxy group, an amino group or a thiol group; R¹¹ to R²⁰ which do not bond with * or ** are independently a hydrogen atom, a hydroxy group, a hydrocarbon group having 1 to 15 carbon atoms, a hydrocarbon ether group having 1 to 15 carbon atoms, or a group containing a carbonyl group; R¹¹ to R²⁰ may be the same as or different from each other; provided that at least one of R¹¹ to R¹⁵ is a hydrogen atom, and at least one of R¹⁶ to R²⁰ is a hydrogen atom.

In the formula (1), each line extended from the atom "C" to which R^{a} is bonded to the left and right rings is bonded with each of the carbon atom in which any of R¹¹ to R¹⁵ is substituted and which is on the ring, and the carbon atom in which any of R¹⁶ to R²⁰ is substituted and which is on the ring, and two of R¹¹ to R²⁰ which is bonded to each line and which is bonded to the carbon atom on the ring are single bonds bonded to each line.

The hydrocarbon group having 1 to 15 carbon atoms may be linear, or it may be branched. These hydrocarbon groups may be saturated, or they may be unsaturated. The hydrocarbon group having 1 to 15 carbon atoms is preferably a linear or branched hydrocarbon group having 1 to 10 carbon atoms, more preferably a linear or branched hydrocarbon group having 1 to 5 carbon atoms, and still more preferably a linear hydrocarbon group having 1 to 3 carbon atoms.

Any of these preferable hydrocarbon groups may be saturated, or any of them may be unsaturated.

The hydrocarbon ether group having 1 to 15 carbon atoms may be linear, or it may be branched. These hydrocarbons may be saturated, or they may be unsaturated.

The hydrocarbon ether group having 1 to 15 carbon atoms is preferably a linear or branched hydrocarbon ether group having 1 to 10 carbon atoms, more preferably a linear or branched hydrocarbon ether group having 1 to 5 carbon atoms, and still more preferably a linear hydrocarbon ether group having 1 to 3 carbon atoms.

Any of the hydrocarbons of these preferable hydrocarbon ether groups may be saturated, or any of them may be unsaturated.

The hydrocarbon ether group can be represented by, for example, -(CH₂)ₐ-O-(CH₂)_{b}-H (wherein both of a and b are an integer of 1 or more, provided that a+b is 2 or more). In this case, the case where the hydrocarbon ether group is linear indicates that both of the structures represented by-(CH₂)ₐ-, and -(CH₂)_{b}- are linear, and the case where the hydrocarbon ether group is branched indicates that any structure represented by -(CH₂)ₐ- or -(CH₂)_{b}- is branched.

In addition, the case where the hydrocarbon of the hydrocarbon ether group is saturated indicates that both of -(CH₂)ₐ-, and -(CH₂)_{b}- are the saturated hydrocarbon, and the case where the hydrocarbon of the hydrocarbon ether group is unsaturated indicates any of -(CH₂)ₐ-, or-(CH₂)_{b}- is the unsaturated hydrocarbon.

When the hydrocarbon ether group is represented by -(CH₂)ₐ-O-(CH₂)_{b}-, the number of carbon atoms of the hydrocarbon ether group is the number represented by (a+b).

Examples of the group containing a carbonyl group include an aldehyde group (-CHO), a carboxyl group (-COOH), a carbonyl group (-COR), an ester group (-COOR), and an amide group (-CONRR').

R^{c1} and R^{c2} may be any of a hydroxy group, an alkoxy group, an amino group or a thiol group. It is preferably a hydroxy group or an alkoxy group, and more preferably a hydroxy group.

The total amount of the compounds represented by the formula (1) is 0.06% by mass or more based on the total amount of the lignin component (A). It may be 0.1% by mass or more, it may be 0.3% by mass or more, it may be 0.5% by mass or more, and it may be 0.7% by mass or more. Accordingly, the compatibility of the lignin component (A) and the thermoplastic resin (B) can be improved, and the mechanical properties of the resin composition (C) can be further improved.

The upper limit of the total amount of the compounds represented by the formula (1) based on the total amount of the lignin component (A) is not particularly limited, but it is typically 10% by mass or less.

The amount of the lignin included in the resin composition (C) or the lignin component (A) can be confirmed as a value calculated by measuring the amount of the methoxyl group contained in the resin composition (C) in accordance with the method for measuring the methoxyl group by Viebock and Schwappach method (see "Methods In Lignin Chemistry" P336 to 340, published by Uni Publication, 1994), and using the measured amount of the obtained methoxyl group for the substitute of the amount of lignin.

The kind of and the compound represented by the formula (1) included in the resin composition (C) or the lignin component (A) and the amount thereof are confirmed using liquid chromatography and mass spectrometry (LC/MS).

In LC/MS, it is assumed that the following compounds (a) to (h) are included therein as the compound represented by the formula (1). For example, when the amount of a target compound is less than 0.01% by mass, the target compound is considered to be in less than or equal to the detectable limit. The details of the measurement are described in Examples.

The amount of each of the compounds (a) to (h) specified by the above-described LC/MS includes the amount of an isomer having the same molecular weight as that of each compound and having different bonding position.

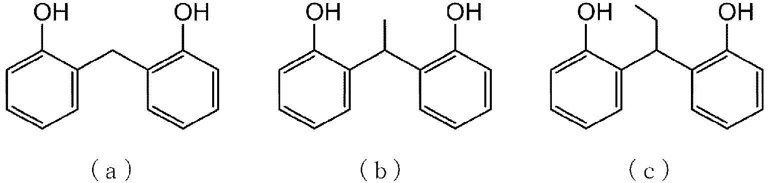

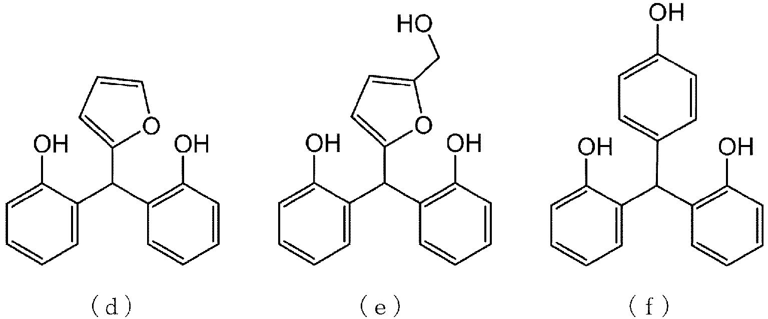

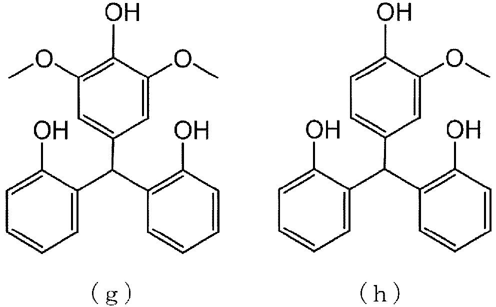

In one embodiment, the lignin component (A) includes two or more kinds of a compound represented by any of the formulas (a) to (h), and the total amount of the compound represented by any of the formulas (a) to (h) is 0.06% by mass or more based on the total amount of the lignin component (A). It may be 0.1% by mass or more, it may be 0.3% by mass or more, it may be 0.5% by mass or more, and it may be 0.7% by mass or more.

In one embodiment, the amount of a compound represented by the following formula (2) (also referred to as a compound (2)) is 0.1% by mass or less based on the entire resin composition (C). It may be 0.05% by mass or less. The compound represented by the formula (2) is regarded as one falling under the lignin component (A).

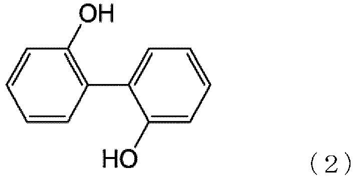

When the amount of compound represented by the formula (2) is within the above range, excellent mechanical properties can be exhibited.

The amount of the compound represented by the formula (2) is measured by the method described in Examples described later.

In one embodiment, the amount of the free phenol monomer is 0.02% by mass or more and 8.0% by mass or less based on the entire resin composition (C). The free phenol monomer contained in the resin composition (C) remains without mainly removing a part of the phenol used in the production of the lignin component. The amount of the free phenol monomer may be 0.1% by mass or more, it may be 0.5% by mass or more, it may be 1.0% by mass or more, it may be 2.0% by mass or more, and it may be 3.0% by mass or more. The free phenol monomer is regarded as one falling under the lignin component (A).

The amount of the free phenol monomer is measured by the method described in Examples described later.

In one embodiment, the maximum value of peak of a differential distribution value (dw/dLogM) present in a molecular weight LogM2.35 to 2.60 of the lignin component (A) as measured by gel permeation chromatography (GPC) is 50 or more and 150 or less, or a difference of an integral distribution value (%) in the molecular weight LogM2.35 to 2.55 thereof is 5 or more and 15 or less.

When the maximum value of peak of a differential distribution value (dw/dLogM) present in a molecular weight LogM2.35 to 2.60 of the lignin component as measured by GPC is 50 or more and 150 or less, the compatibility of the lignin component (A) and the thermoplastic resin (B) can be improved, and the mechanical properties of the resin composition (C) can be further improved. The maximum value may be 130 or less, and it may be 110 or less.

Similarly, when the difference of an integral distribution value (%) in the molecular weight LogM2.35 to 2.55 thereof is 5 or more and 15 or less, the compatibility of the lignin component (A) and the thermoplastic resin (B) can be improved, and the mechanical properties of the resin composition (C) can be further improved. The integral distribution value may be 6 or more, it may be 7 or more, and it may be 8 or more. Further, it may be 13 or less, and it may be 12 or less.

The lignin component (A) is obtained by, as described above, for example, extracting the lignin-containing material with the solvent containing the organic solvent, or reacting the lignin-containing material with the solvent containing the organic solvent, and then purifying it. The solvent containing the organic solvent typically includes at least a compound represented by the following formula (I).

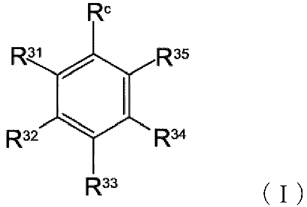

In the formula (I), R³¹ to R³⁵ is independently a hydrogen atom, a hydroxy group, a hydrocarbon group having 1 to 15 carbon atoms, a hydrocarbon ether group having 1 to 15 carbon atoms, or a group containing a carbonyl group, and R³¹ to R³⁵ may be the same as or different from each other. Provided that at least one of R³¹ to R³⁵ is a hydrogen atom.

The hydrocarbon group in the case where R³¹ to R³⁵ is a hydrocarbon group having 1 to 15 carbon atoms is the same as those for R¹¹ to R²⁰ in the formula (1) described above. The hydrocarbon ether group in the case where R³¹ to R³⁵ is a hydrocarbon ether group having 1 to 15 carbon atoms is the same as those for R¹¹ to R²⁰ in the formula (1) described above. The group containing the carbonyl group in the case where R³¹ to R³⁵ is a group containing a carbonyl group is the same as those for R¹¹ to R²⁰ in the formula (1) described above.

R^{c} is a hydroxy group, an alkoxy group, an amino group or a thiol group.

R^{c} may be any of a hydroxy group, an alkoxy group, an amino group or a thiol group, but it is preferably a hydroxy group or an alkoxy group, and more preferably a hydroxy group, from the viewpoint of the affinity thereof with the basic skeleton of the lignin.

The solvent may include those other than the compound represented by the formula (I). Examples of the solvent component other than the compound represented by the formula (I) include any one or more members of alcohols, ketones, ethers, esters, aromatics other than the compound represented by the formula (I), and water, from the viewpoint of solubility of lignin in the raw material and economy.

In the present specification, the "lignin" is a polymer compound in which three kinds of lignin monomers being p-hydroxycinnamic alcohols are polymerized, and it has a basic skeleton represented by the following formula (A).

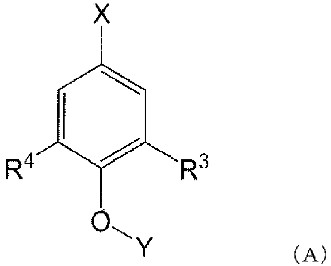

In the formula (A), R³ and R⁴ being substituents are a hydrogen atom or a methoxy group. Those in which both R³ and R⁴ are hydrogen atoms are referred to as p-hydroxyphenyl nuclei (H-type skeleton), those in which either R³ or R⁴ is a hydrogen atom are referred to as guaiacyl nuclei (G-type skeleton), and those in which both R³ and R⁴ are not a hydrogen atom are referred to as syringil nuclei (S-type skeleton).

X in the formula (A) is bonded with a carbon atom, and Y therein is bonded with a hydrogen atom or a carbon atom.

The lignin-containing material (raw material) used as the extraction target of the lignin component (A) or the target of the above-mentioned reaction is not particularly limited as long as it is a material containing lignin.

In one embodiment, the lignin-containing material is one or more members selected from the group consisting of biomass and biomass residue.

Examples of the biomass residue include those derived from plant-based biomass such as arboreous biomass and herbal biomass.

Examples of the biomass residue include saccharification residue of plant-based biomass and fermentation residue thereof (second generation of ethanol saccharification residue, second generation of ethanol fermentation residue, and the like), black liquor and lignin (sulfite lignin, kraft lignin, soda lignin, and the like) purified from black liquor, and organosolv lignin extracted from the plant-based biomass with an organic solvent, and any one or more of these can be used. Among them, any one or more of saccharification residue of the plant-based biomass, fermentation residue thereof and organosolv lignin are preferably used as the lignin-containing material from the viewpoint of availability, quality of the lignin component, and economical efficiency.

The arboreous biomass and herbal biomass may be non-food plant biomass, and they may be lignocellulose-based biomass.

Examples of the arboreous biomass include conifer and broad-leaved plant such as cedar, cypress, Japanese cypress, cherry, eucalyptus, beech and bamboo.

Examples of the herbal biomass include palm trunk and empty bunch, fiber and seed of palm fruit, palm shell, bagasse (pomace of sugarcane and high biomass sugarcane), cane top (top and leaf of sugarcane), energy cane, rice straw, wheat straw, cob, stem and residue of corn (corn stover, corn cob and corn hull), residue of sorghum (including sweet sorghum), peel and hull of Jatropha seed, cashew hull, switchgrass, erianthus, high biomass yield crop, energy crop, and the like.

Among these, they are preferably herbal biomass, more preferably palm empty bunch, fiber and seed of palm fruit, palm shell, wheat straw, cob, stem and residue of corn (corn stover, corn cob and corn hull), bagasse, residue of sorghum (including sweet sorghum), cane top, energy cane, and residue after extraction of these useful components, and still more preferably palm empty bunch, palm shell, cob, stem and residue of corn (corn stover, corn cob and corn hull), bagasse, residue of sorghum (including sweet sorghum), cane top, energy cane, and residue after extraction of these useful components. For example, hemicellulose, carbohydrate, mineral, moisture, and the like are included in the useful components.

The bagasse contains about 5 to 30% by mass of the lignin. In addition, the lignin in the bagasse includes all of H unit, G unit and S unit as the basic skeleton.

The plant-based biomass may be pulverized. It may be in the form of a block, a chip, a powder, or a hydrate containing water.

The palm empty bunch, palm shell, bagasse, corn stover and the like are treated with an organosolv method, a pressurized hydrothermal method, a steam explosion method, an ammonia treatment method, an ammonia explosion method, an acid treatment method, a dilute sulfuric explosion method, an alkali treatment method, an oxidative decomposition method, a pyrolysis method, microwave heating method, and the like, and preferably treated with an acid treatment, a dilute sulfuric explosion, a steam explosion, and the like to separate hemicellulose to the solution side, and then the glucose is separated to the solution side by converting cellulose to glucose using an enzyme, or the hemicellulose is saccharified together with cellulose without separating the hemicellulose to separate them to the solution side. As a result, the remaining solid is the saccharification residue of the plant-based biomass. Alternatively, the saccharide is not separated, and it is separated as ethanol by fermentation to the solution side, and the remaining solid is the fermentation residue of the plant-based biomass.

The saccharification residue of the plant-based biomass contains the lignin as a main component, and it contains decomposed organic substance, catalyst, enzyme, ash, cellulose and the like. The fermentation residue of the plant-based biomass contains the lignin as a main component, and it contains decomposed organic substance, catalyst, enzyme, yeast, ash, cellulose, and the like.

The method for producing the lignin component (A) is, for example, as follows.

Any one or more of the saccharification residue of the plant-based biomass and the fermentation residue thereof is used as a raw material, and for example, a solvent including a compound having one or more members selected from the group consisting of a hydroxy group and an ether bond (hereinafter also referred to as "organic solvent A") is added therein. The organic solvent A is described in detail in the "Solvent" section below.

The solvent including the organic solvent A typically includes at least the compound represented by the formula (1) described above.

Heating is continued for about 2 to 4 hours after the solvent is added. And then, since the heating solution contains insoluble matter, filtration is conducted using No.2 filter paper. The filtered solid is unextracted components and inorganic contaminants. The filtrate is distilled under reduced pressure to remove the solvent. The solvent which cannot be removed by distillation are removed by vacuum drying. The separated solid is the lignin component (A).

Further, as the lignin-containing material used as a raw material, the lignin separated from a non-food plant biomass by treatment with an organosolv method, a pressurized hydrothermal method, a steam explosion method, an ammonia treatment method, an ammonia explosion method, an acid treatment method, a dilute sulfuric explosion method, an alkali treatment method, an oxidative decomposition method, a pyrolysis method, microwave heating method, and the like can also be used. Specifically, for example, the lignin separated by eluting the lignin contained in the non-food plant biomass into the solvent by treatment with the organic solvent or a solvent containing the organic solvent and water, by filtering the lignin-containing solution to remove cellulose and the like, and then by concentrating the solution and by drying it can also be used. When a solvent containing the organic solvent A is used as the organic solvent described above, the lignin component (A) can also be directly extracted from the non-food plant biomass.

### (Solvent)

The solvent used for the extraction or reaction contains an organic solvent. The solvent containing the organic solvent typically includes the compound represented by the formula (I) as described above. Examples of an organic solvent other than the compound represented by the above formula (I) include alcohols such as methanol, ethanol, isopropyl alcohol, ethylene glycol and polyethylene glycol; ketones such as acetone and methyl ethyl ketone; ethers such as tetrahydrofuran and 1,4-dioxane; esters such as ethyl acetate; aromatics other than the compound represented by the formula (I) such as toluene; and the like.

In one embodiment, a solvent containing an organic solvent A (a compound having one or more members selected from the group consisting of a hydroxy group and an ether bond) is used for the extraction or reaction of the lignin. When the organic solvent A is used as the organic solvent for extracting or reacting the lignin, it is expected that an extract or reaction product derived from the lignin is suitably prevented from being modified to be hydrophilic. The lignin component (A) to be extracted may be reacted with the organic solvent containing the organic solvent A. When the organic solvent A is used, the extract or reaction product derived from the lignin can be suitably generated.

When the organic solvent A has a hydroxy group, the number of hydroxy groups possessed by the organic solvent A is not particularly limited, and it may be, for example, 1 or more. Further, it may be 10 or less, 5 or less, 4 or less, 3 or less, or 2 or less. The number of hydroxy groups possessed by the organic solvent A may be 1, 2, 3, 4 or 5, it may be 1, 2 or 3, it may be 1 or 2, and it may be 1.

Examples of the organic solvent A having two hydroxy groups include ethylene glycol, 1,2-propanediol, 1,3-propanediol, 1,2-butanediol, 1,3-butanediol, 1,4-butanediol, 2,3-butanediol, diethylene glycol, triethylene glycol, polyethylene glycol, and the like. Examples of the organic solvent A having three hydroxy groups include glycerin, 1,2,3-butanetriol, 1,2,4-butanetriol, 1,2,3-heptatriol, 1,2,4-heptatriol, 1,2,5-heptatriol, 2,3,4-heptatriol, and the like. Examples of the organic solvent A having four hydroxy groups include pentaerythritol, erythritol, and the like. Examples of the organic solvent A having five hydroxy groups include xylitol and the like. Examples of the organic solvent A having six hydroxy groups include sorbitol and the like.

These organic solvents A (organic solvent A having a plurality of hydroxy groups) having two or more of hydroxy groups are, from the viewpoint of improvement of efficiency of extraction or reaction of the lignin, and economy, preferably one or more members selected from the group consisting of ethylene glycol, 1,2-propanediol, 1,3-propanediol, 1,2-butanediol, 1,3-butanediol, 1,4-butanediol, 2,3-butanediol, diethylene glycol, triethylene glycol, polyethylene glycol, polypropylene glycol, and glycerin, more preferably one or more members selected from the group consisting of ethylene glycol, 1,2-propanediol, 1,3-propanediol, 1,2-butanediol, 1,3-butanediol, 1,4-butanediol, polyethylene glycol, polypropylene glycol, and glycerin, still more preferably one or more members selected from the group consisting of ethylene glycol, polyethylene glycol, and glycerin, and still more preferably ethylene glycol and polyethylene glycol.

The organic solvent A is preferably a compound represented by the following formula (II):

R-OH (II)

wherein in the formula (II), R is an alkyl group having 1 to 10 carbon atoms, or a substituted or unsubstituted phenyl group.

When R is the alkyl group having 1 to 10 carbon atoms, the number of carbon atoms in the alkyl group may be 1 or more, 2 or more, 3 or more, or 4 or more, and it may be 10 or less, 8 or less, or 6 or less. The alkyl group may be linear, or it may be branched.

When the number of carbon atoms in the alkyl group is particularly 2 or more, it can be expected that an extract or reaction product derived from the lignin is more remarkably prevented from being modified to be hydrophilic. In addition, as the number of carbon atoms increases to 2 or more, 3 or more, or even 4 or more, such an effect can be expected to be more remarkably exhibited.

The compound represented by the formula (II) wherein R is an alkyl group having 1 to 10 carbon atoms is, for example one or more members selected from the group consisting of methanol, ethanol, 1-propyl alcohol, 2-propyl alcohol, 1-butyl alcohol, 2-butyl alcohol, isobutyl alcohol, tertiary butyl alcohol, 1-pentyl alcohol, 2-pentyl alcohol, 3-methyl-1-butyl alcohol, 1-hexyl alcohol, cyclohexyl alcohol, 1-heptyl alcohol, 1-octyl alcohol, 2-ethylhexyl alcohol and the like, preferably one or more members selected from the group consisting of methanol, ethanol, 1-propyl alcohol, and 2-propyl alcohol, more preferably one or more members selected from the group consisting of methanol, ethanol, and 2-propyl alcohol, and still more preferably ethanol.

The compound represented by the formula (I) described above corresponds to one in the case where, in the formula (II), R is a substituted or unsubstituted phenyl group, and the hydroxy group ("OH" group in the formula (II)) is R^{c} described above.

In the compound represented by the above formula (I), at least one of R³¹, R³³ and R³⁵ is preferably a hydrogen atom, and all of R³¹, R³³ and R³⁵ are more preferably hydrogen atoms.

Examples of the compound represented by the formula (I) include one or more members selected from the group consisting of 2-alkylphenol such as phenol, catechol, resorcinol, hydroquinone, phloroglucine, o-cresol, m-cresol, p-cresol, 2-ethylphenol and 2-propylphenol; 3-alkylphenol such as 3-ethylphenol, 3-propylphenol and cardanol; 4-alkylphenol such as 4-ethylphenol, 4-propylphenol, 4-octylphenol and 4-nonylphenol; 5-alkylresorcinol such as 5-methylresorcinol, 5-ethylresorcinol and 5-propylresorcinol; 3,5-dialkylphenol such as 3,5-dimethylphenol, 3-methyl-5-ethyl-phenol and 3,5-diethylphenol; anisole, aniline, thiophenol, and the like, preferably one or more members selected from the group consisting of phenol, catechol, resorcinol, hydroquinone, o-cresol, m-cresol, p-cresol, cardanol, 4-octylphenol, 4-nonylphenol and anisole, more preferably one or more members selected from the group consisting of phenol, catechol, resorcinol, hydroquinone, o-cresol, m-cresol, p-cresol and anisole, still more preferably one or more members selected from the group consisting of phenol, o-cresol, m-cresol, p-cresol and anisole, still more preferably one or more members selected from the group consisting of phenol and anisole, and still more preferably phenol.

When the compound represented by the formula (I) such as phenol is used as the organic solvent, it is expected that the lignin component is reacted with the compound represented by the formula (I) to increase the skeleton of the H-type skeleton and the G-type skeleton.

When the compound represented by the formula (I) is used as the organic solvent, the lignin and the compound represented by the formula (I) are reacted. As a result, it can be expected that a substitution reaction in which the substituents R³ and R⁴ of the lignin base skeleton represented by the formula (A) in the lignin are transformed into structures derived from the compound represented by the formula (I) happens to generate the compound represented by the formula (1).

The organic solventAmay be used alone, or two or more thereof may be used in combination.

For example, one or two or more members selected from the compound represented by the formula (II) wherein R is an alkyl group having 1 to 10 carbon atoms, and one or two or more members selected from the compound represented by the formula (II) wherein R is a substituted or unsubstituted phenyl group (that is, the compound represented by the formula (I)) may be used as the organic solvent A in combination. As the specific example thereof, ethanol and phenol may be used in combination.

The organic solvent may include other organic solvent other than the organic solvent A.

The other organic solvent is not particularly limited, and examples thereof include ketones such as acetone and methyl ethyl ketone, esters such as ethyl acetate, aromatics other than the compound represented by the formula (I) such as toluene, and the like. The other organic solvent may be used alone, or two or more thereof may be used in combination.

In one embodiment, 10% by mass or more, 20% by mass or more, 30% by mass or more, 40% by mass or more, 50% by mass or more, 60% by mass or more, 70% by mass or more, 80% by mass or more, 90% by mass or more, 95% by mass or more, 97% by mass or more, or 99% by mass or more of the organic solvent is the organic solvent A.

The solvent used for extraction or reaction may include water in addition to the organic solvent.

The amount of water based on the organic solvent in the solvent used for extraction or reaction may be, for example, 10 parts by mass or more, 20 parts by mass or more, 30 parts by mass or more, 50 parts by mass or more, or 70 parts by mass or more based on 100 parts by mass of the organic solvent. It may be 900 parts by mass or less, 700 parts by mass or less, 400 parts by mass or less, 300 parts by mass or less, or 100 parts by mass or less.

When the lignin component (A) is extracted with the solvent from the lignin-containing material, or when the lignin-containing material and the solvent are reacted, the solvent may or may not be phase-separated. When the solvent is phase-separated, the term "solvent used for extraction or reaction" means the solvent constituting the phase containing the highest concentration of the lignin component (A).

### (Extraction)

The extraction in the present invention means that extraction of the lignin component (A) containing the extract derived from the lignin is extracted from the lignin-containing material including a component other than the lignin.

The term "extraction" in one embodiment indicates that the lignin component (A) is extracted from a solid material containing the lignin in the case where the lignin-containing material is the solid material containing the lignin, and it does not indicate that an organic solvent is added to a solution in which all of the lignin has already been dissolved (for example, an aqueous solution containing a basic compound). In such an embodiment, the lignin-containing material prior to extraction (lignin-containing material prior to addition of the organic solvent) contains:
the solid material containing the lignin, and the lignin which has already dissolved in the solvent, or
the solid material containing the lignin, and no lignin which has already dissolved in the solvent.

In the extraction, the amount of the solvent added to the lignin-containing material is not particularly limited.

The mass ratio [solvent/lignin] of the solvent to the lignin in the lignin-containing material may be, for example, 0.1 or more. Further, it may be 15 or less, 10 or less, 5 or less, 4 or less, 3 or less, 2 or less, 1 or less, 0.7 or less, or 0.5 or less.

### (Reaction)

In the present specification, the reaction "the lignin-containing material is "reacted" with the solvent" typically means that the lignin-containing material extracted from the plant-based biomass is reacted with the solvent to obtain the lignin component (A).

In one embodiment, the above-described "reaction" indicates that the lignin-containing material purified from black liquor, or the lignin-containing material extracted with the organic solvent from the plant-based biomass is reacted with the solvent to obtain the lignin component (A).

The amount of the solvent added to the lignin-containing material is not particularly limited.

The mass ratio [solvent/lignin] of the solvent to the lignin in the lignin-containing material may be, for example, 0.1 or more. Further, it may be 15 or less, 10 or less, 5 or less, 4 or less, 3 or less, 2 or less, 1 or less, 0.7 or less, or 0.5 or less.

### (Acid catalyst)

The extraction or reaction described above can be conducted without catalyst or under catalyst. Examples of the catalyst include an acid catalyst, and the like. Examples of the acid catalyst include an inorganic acid such as phosphoric acid, phosphoric acid ester, hydrochloric acid, sulfuric acid and sulfuric acid ester; an organic acid such as acetic acid, formic acid, oxalic acid and p-toluenesulfonic acid; and the like. The acid catalyst may be used alone, or two or more thereof may be used in combination.

When the total amount of the lignin and the solvent is used as 100 parts by mass, the amount of the acid catalyst may be, for example, larger than 0% by mass, 0.1% by mass or more, or 0.2% by mass or more. It may be 5.0% by mass or less, 3.0% by mass or less, or 2.6% by mass or less.

When the extraction or reaction proceeds without a catalyst, for example, the post-treatment (purification step) after the extraction or reaction step can be omitted.

The temperature of the extraction or reaction is not particularly limited as long as the lignin component (A) can be extracted from the lignin-containing material, or the lignin-containing material can be reacted with the solvent, and it may be, for example, 100°C or higher, 140°C or higher, higher than 140°C, 150°C or higher, or 180°C or higher. It may be, for example, 350°C or lower, 300°C or lower, 270°C or lower, 250°C or lower, or 230°C or lower. When it is higher than 140°C, the solubility of the lignin (lignin component (A)) can be improved to promote the extraction or reaction. When it is 300°C or lower, the progress of lignin recombination or lignin polymerization can be suitably prevented.

The time of the extraction or reaction can be appropriately set, and it may be, for example, 0.1 hours or more, 0.5 hours or more, 1 hour or more, or 2 hours or more. It may be 15 hours or less, 10 hours or less, or 8 hours or less.

### (Purification)

The lignin component (A) is prepared by using the above-mentioned extraction or reaction, but it may be purified after the extraction or reaction, if necessary. An example of purification will be described below.

The lignin component (A) after the extraction can be first subjected to a solid-liquid separation step as the purification (purification step). The lignin component (A) after the extraction is dissolved in the solvent, but unextracted components and inorganic contaminants are present in the liquid as a solid. These are preferably removed using filtration (hot filtration). For example, the extraction liquid is added to a pressure filter (hot filter) equipped with a filter paper such as No.5C and No.2, and then it is filtered under pressure at about 20 to 100°C, about 20 to 70°C, or normally about 20 to 50°C under about 0.1 to 0.99 MPa, or normally about 0.1 to 0.4 MPa. The filtered solid may optionally be diluted and/or washed with a solvent, and then it may be filtered. In the filtration, the lignin component (A) is contained in the filtrate. Further, for example, the extraction-generated liquid may be diluted and/or washed with any one or more general-purpose solvents having a low boiling point such as water, ketones such as acetone and methyl ethyl ketone, alcohols such as methanol, ethanol and isopropyl alcohol, ethers such as tetrahydrofuran, and the like, and then it is subjected to the solid-liquid separation. In the solid-liquid separation, the lignin component (A) is contained in the solution.

A method for conducting the solid-liquid separation is not particularly limited, and examples thereof include filtration, filter pressing, centrifugation, dehydrator, and the like.

Further, the solution containing the lignin component (A) may be subjected to distillation. The distillation may be conducted by using reduced-pressure distillation at the temperature of about 40 to 200°C, or normally about 50 to 150°C under reduced pressure of about 3 to 20 kPa, or normally about 5 to 10 kPa to remove the solvent. The lignin component (A) is obtained as a solid or viscous solid in the distillation. Further, for example, when other diluting solvents are used, the reduced-pressure distillation is conducted at an appropriate temperature in which the boiling point of the solvent is considered to remove the general-purpose solvent having a low boiling point, and then the same manner as described above can be conducted to remove the solvent used for the extraction. The lignin component (A) is obtained as a solid or viscous solid in the distillation.

The lignin component (A) obtained by using distillation may be purified by normally heating it to 50 to 200°C and drying it with a solid or molten state in vacuum to remove the remaining solvent (for example, the organic solvent A). Further, the lignin component (A) in a heated flow state after distillation may be purified by drying it as it is in vacuum in the same manner described above to remove the remaining solvent (for example, the organic solvent A).

It is preferable that the lignin component (A) obtained by distillation or dryness under reduced pressure be not reprecipitated. Accordingly, the lignin component including the compound represented by the formula (1) with the above amount can be easily obtained.

In the purification step, any one of the above-mentioned filtration, distillation, and dryness under reduced pressure may be conducted, or two or more thereof may be conducted in combination.

The remaining organic solvent in the lignin component (A) is not particularly limited, but it is normally less than 30% by mass based on the total amount thereof. It is preferably less than 10% by mass, more preferably less than 5% by mass, and still more preferably less than 1% by mass.

In the method for producing the lignin component (A) included in the resin composition (C) of the present invention, 50% by mass or more of the lignin amount contained in the saccharification residue of the plant-based biomass and the fermentation residue of the plant-based biomass is preferably obtained as the lignin component (A). 60% by mass or more thereof is more preferably obtained as the lignin component (A), 70% by mass or more thereof is still more preferably obtained as the lignin component (A), it is particularly preferable that 80% by mass or more thereof be obtained as the lignin component (A), and it is particularly preferable that 90% by mass or more thereof be obtained as the lignin component (A).

### (Thermoplastic resin (B))

The thermoplastic resin (B) is not particularly limited, and various thermoplastic resins can be used.

Examples of the thermoplastic resin (B) include polyamide resin, acrylic resin, polyphenylene sulfide resin, polyvinyl chloride resin, polyolefin, polyacetal resin, polycarbonate resin, polyurethane, polybutylene terephthalate, acrylonitrile butadiene styrene (ABS) resin, phenoxy resin, poly sulfone, polyether sulfone, polyether ketone, polyether ether ketone, polyester resin, and the like. Among them, polyamide is preferable.

A known polyamide resin can be used as the polyamide resin. Examples of the polyamide resin include polyamide-4, polyamide-4,6, polyamide-6, polyamide-6,6, polyamide-3,4, polyamide-12, polyamide-11, polyamide-4,10, polyamide-6,10 (also referred to as "polyamide-610 (PA610"), polyamide-4T, polyamide-6T, polyamide-9T, polyamide-10T, polyamide obtained from adipic acid and m-xylylenediamine, and the like. Among them, polyamide-6, polyamide-6,6, polyamide-6,10, polyamide-11 and polyamide-12 are preferable.

In one embodiment, the thermoplastic resin (B) includes a condensation polymerization polymer. The condensation polymerization polymer is a polymer obtained by a condensation polymerization reaction.

In one embodiment, the thermoplastic resin (B) includes one or more members selected from the group consisting of a polyamide resin, a polyester resin and a polycarbonate resin.

When the thermoplastic resin (B) includes the condensation polymerization polymer, particularly the one or more members selected from the group consisting of a polyamide resin, a polyester resin and a polycarbonate resin, improving effect of the mechanical properties is remarkably exhibited using the interaction between the lignin component (A) and the thermoplastic resin (B).

The thermoplastic resin (B) may include a bio-based thermoplastic resin. Examples of the bio-based thermoplastic resin include polylactic acid (PLA), polybutylene succinate (PBS), PBAT (polybutylene adipate terephthalate), and the above-described polyamide-610 (PA610), polyamide-11 (PA11), and the like.

In one embodiment, 50% by mass or more, 60% by mass or more, 70% by mass or more, 80% by mass or more, 90% by mass or more, 95% by mass or more, 98% by mass or more, or substantially 100% by mass of the thermoplastic (B) is
the condensation polymerization polymer, or
the one or more members selected from the group consisting of a polyamide resin, a polyester resin and a polycarbonate resin.

In one embodiment, the amount of the lignin component (A) in the resin composition (C) is 1 to 60% by mass, 5 to 50% by mass or 10 to 45% by mass.

In one embodiment, the amount of the thermoplastic resin (B) in the resin composition (C) is 40 to 99% by mass, 50 to 95% by mass or 55 to 90% by mass.

The resin composition (C) may or may not include other component other than the lignin component (A) and the thermoplastic resin (B). Examples of the other component include an antioxidant, a nucleating agent, a mold release agent, and the like. One or more members arbitrarily selected from known ones may be used as these.

Examples of the antioxidant include a phosphorus-based antioxidant, a phenol-based antioxidant, an amine-based antioxidant, a sulfur-based antioxidant, and the like. These may be used alone, or a plurality of kinds thereof may be used in combination.

Examples of the nucleating agent include an inorganic nucleating agent and an organic nucleating agent. These may be used alone, or a plurality of kinds thereof may be used in combination.

Examples of the mold release agent include polyethylene wax, silicone oil, long-chain carboxylic acid, long-chain carboxylate metallic salt, and the like. These may be used alone, or a plurality of kinds thereof may be used in combination.

In one embodiment, 50% by mass or more, 60% by mass or more, 70% by mass or more by mass, 80% by mass or more, 90% by mass or more, 95% by mass or more, 98% by mass or more, or substantially 100% by mass of the resin composition (C) is the lignin component (A) and the thermoplastic resin (B).

In one embodiment, the amount of the lignin component (A) is 1 to 60% by mass, 5 to 50% by mass or 10 to 45% by mass based on the total amount of the lignin component (A) and the thermoplastic resin (B) in the resin composition (C). The amount of the thermoplastic resin (B) therein is 40 to 99% by mass, 50 to 95% by mass or 55 to 90% by mass.

### 2. Fiber-reinforced resin composition (E)

A fiber-reinforced resin composition (E) according to an aspect of the present invention includes the resin composition (C) according to an aspect of the present invention, and a reinforced fiber (D).

According to the fiber-reinforced resin composition (E) of the present aspect, an effect of excellent moldability and mechanical properties can be obtained.

### (Reinforced fiber (D))

In one embodiment, the reinforced fiber (D) includes one or more members selected from the group consisting of a carbon fiber, a glass fiber, an aramid fiber and a cellulose fiber. Accordingly, the effects of the present invention can be better exhibited. Among these, it is preferably a carbon fiber or a glass fiber, and most preferably a carbon fiber.

As the carbon fiber, various carbon fibers such as a PAN-based carbon fiber made of polyacrylonitrile, a pitch-based carbon fiber made of coal tar pitch in petroleum or coal, and a phenol-based carbon fiber made of thermosetting resin, for example, phenol resin can be used. The carbon fiber may be one obtained by a vapor deposition method, or it may be a recycled carbon fiber (RCF). The carbon fiber is not particularly limited as described above, and at least one carbon fiber selected from the group consisting of PAN-based carbon fiber, pitch-based carbon fiber, thermosetting carbon fiber, phenol-based carbon fiber, vapor-grown carbon fiber and recycled carbon fiber (RCF) is preferable.

Although there are carbon fibers having various graphite degrees depending on the raw material quality and firing temperature in production thereof, the carbon fiber having any graphite degree can be used. The shape of the carbon fiber is not particularly limited, and the carbon fiber having at least one shape selected from the group consisting of milled fiber, bundled cutting (chopped strand), short fiber, roving, filament, tow, whisker, nanotube, and the like can be used. When the bundled cutting (chopped strand) is used, the carbon fiber having the average fiber length of 0.1 to 50 mm and the average fiber diameter of 5 to 20 µm is preferably used. The density of the carbon fiber is not particularly limited, but it is preferably 1.75 to 1.95 g/cm³.

The form of the carbon fiber may be a single fiber, or it may be a fiber bundle. Both of the single fiber and the fiber bundle may be mixed. The number of the single fibers constituting each fiber bundle may be almost uniform, or it may be different from each other. The average fiber diameter of the carbon fiber varies depending on the form thereof, and for example, the carbon fiber having the average fiber diameter of preferably 0.0004 to 15 µm, more preferably 3 to 15 µm, and still more preferably 5 to 10 µm can be used.

When the carbon fiber has the form of a woven fabric, a nonwoven fabric or a unidirectional material, the single fiber having the average fiber diameter of preferably 3 to 15 µm, and more preferably 5 to 7 µm can be used. When the carbon fiber has the form of a woven fabric, a nonwoven fabric or a unidirectional material, the carbon fibers bundled in one direction (fiber bundle) can be used. In this case, a product in which 6,000 (6K), 12,000 (12K), 24,000 (24K), 60,000 (60K) or the like of the single fibers of the carbon fibers supplied from a carbon fiber manufacturer are bundled may be used as it is as the fiber bundle, or one in which these are further bundled may be used.

The fiber bundle may be any of a non-twisted yarn, a twisted yarn and an untwisted yarn. The fiber bundle may be contained with a state of opened fiber in the molded body, or it may be contained as the fiber bundle therein as the fiber bundle without opened fiber.

When the carbon fiber has the form of a woven fabric, a nonwoven fabric or a unidirectional material, the molded body can be obtained by immersing the carbon fiber in the resin composition.

The carbon fiber may have a sizing agent attached to the surface thereof. When the carbon fibers to which the sizing agent is attached is used, the type of the sizing agent can be appropriately selected depending upon the types of the carbon fibers and the thermoplastic resins, and it is not particularly limited. As the carbon fiber, various products such as those processed with an epoxy-based sizing agent, a urethane-based sizing agent or a polyamide-based sizing agent, and those without sizing agent are commercialized, and in the present invention, it can be used regardless of the type of the sizing agent and presence thereof.

The type of the glass fiber is not particularly limited, and for example, the glass fibers having various compositions such as E glass, low dielectric glass and silica glass can be selected and used depending on the purpose and application.

The single fiber in which the average fiber diameter of the glass fiber is preferably 5 to 20 µm, and more preferably 7 to 17 µm can be used.

The glass fiber may have a sizing agent attached to the surface thereof. When the glass fibers to which the sizing agent is attached is used, the type of the sizing agent can be appropriately selected depending upon the types of the glass fibers, and it is not particularly limited. As the glass fiber, various products such as those processed with an epoxy-based sizing agent, a urethane-based sizing agent or a vinyl acetate-based sizing agent, and those without sizing agent are commercialized, and in the present invention, it can be used regardless of the type of the sizing agent and presence thereof. In addition, a silane coupling agent such as an aminosilane, an isocyanate silane and an acrylsilane can be used in combination with the sizing agent.

In one embodiment, the amount of the resin composition (C) is 20 to 90% by mass, 30 to 80% by mass, or 40 to 75% by mass based on the total amount of the fiber-reinforced resin composition (E).

In one embodiment, the amount of the reinforced fiber (D) is 10 to 80% by mass, 20 to 70% by mass, or 25 to 60% by mass based on the total amount of the fiber-reinforced resin composition (E).

The fiber-reinforced resin composition (E) may or may not include other component other than the resin composition (C) and the reinforced fiber (D).

In one embodiment, 50% by mass or more, 60% by mass or more, 70% by mass or more, 80% by mass or more, 90% by mass or more, 95% by mass or more, 98% by mass or more, or substantially 100% by mass of the fiber-reinforced resin composition (E) is the resin composition (C) and the reinforced fiber (D).

### 3. Molded body

A molded body according to an aspect of the present invention includes the resin composition (C) according to an aspect of the present invention, or the fiber-reinforced resin composition (E) according to an aspect of the present invention.

According to the molded body of the present aspect, since the resin composition (C) or the fiber-reinforced resin composition (E) has excellent moldability, it can exhibit excellent productivity, processing accuracy, and the like, and further, an effect of excellent mechanical properties can be obtained.

In the molded body, a part or all of the molded body may be constituted by the resin composition (C) or the fiber-reinforced resin composition (E).

In one embodiment, the molded body is an injection-molded body. In injection-molding, it can be molded using a mold having a predetermined shape.

In one embodiment, the molded body is an extrusion-molded body. In the extrusion- molding, for example, a film can be molded using a T-die from the resin composition (C) or the fiber-reinforced resin composition (E) heat-melted. The obtained film may be softened by heating, and then it can be further molded with a predetermined shape.

In one embodiment, the molded body is a press-molded body. In press-molding, for example, a known method such as a cold pressing method and a hot pressing method can be used.

### Examples

Examples of the present invention are described below, but the present invention is not limited by these Examples.

### 1. Preparation of lignin component

### (Production Example 1)

A lignin component (A-1) was prepared by the following method.

### (1) Extraction step

100 parts by mass (68 parts by mass as lignin) of a saccharification residue (the amount of the lignin: 68% by mass) of herbal biomass, 68 parts by mass of phenol, 54 parts by mass of acetone, and 14 parts by mass of water were added to an agitatable pressure-resistant vessel, and they were heated and stirred with 3.0 MPa at 230°C for two hours.

### (2) Purification step

### (2-1) Filtration

The extraction liquid obtained in the above extraction step was diluted with acetone, and then it was added to a pressure filter equipped with No.2 filter paper. It was pressurized to 0.1 to 0.4 MPa with compressed air or nitrogen to filter it.

### (2-2) Distillation

The filtrate obtained in (2-1) above was distilled under reduced pressure (5 to 10 kPa) with heating it (40 to 60°C) using an evaporator to remove acetone. In addition, it was distilled under reduced pressure with heating it (100 to 140°C) using an evaporator to remove phenol.

### (2-3) Dryness under reduced pressure

In order to remove the phenol remaining in (2-2) above, it was dried in vacuo under reduced pressure (1.0 to 5.0 kPa) with heating it (120 to 150°C) to remove the phenol. As a result, the lignin component (A-1) was obtained.

### (Production Example 2)

100 parts by mass (68 parts by mass as lignin) of a saccharification residue (the amount of the lignin: 68% by mass) of herbal biomass, 245 parts by mass of phenol, and 27 parts by mass of water were added to an agitatable pressure-resistant vessel, and they were heated and stirred with 1.7 MPa at 220°C for two hours. Thereafter, a lignin component (A-2) was obtained in the same purification manner as in Production Example 1.

### (Production Example 3)

100 parts by mass (68 parts by mass as lignin) of a saccharification residue (the amount of the lignin: 68% by mass) of herbal biomass, 245 parts by mass of ethanol, and 27 parts by mass of water were added to an agitatable pressure-resistant vessel, and they were heated and stirred with 3.3 MPa at 200°C for two hours. Thereafter, a lignin component (A-3) was obtained in the same purification manner as in Production Example 1.

### (Production Example 4)

100 parts by mass (42 parts by mass as lignin) of a saccharification residue (the amount of the lignin: 42% by mass) of arboreous biomass, 245 parts by mass of phenol, and 27 parts by mass of water were added to an agitatable pressure-resistant vessel, and they were heated and stirred with 1.8 MPa at 220°C for two hours. Thereafter, a lignin component (A-4) was obtained in the same purification manner as in Production Example 1.

### (Production Example 5)

100 parts by mass (parts by mass as lignin) of an empty fruit bunch (the amount of the lignin: 41% by mass) subjected to blasting treatment, 245 parts by mass of phenol, and 27 parts by mass of water were added to an agitatable pressure-resistant vessel, and they were heated and stirred with 2.2 MPa at 240°C for two hours. Thereafter, a lignin component (A-5) was obtained in the same purification manner as in Production Example 1.

The following lignin components (A-6) and (A-7) described below were prepared as the lignin component (A).

### Lignin component (A-6): kraft lignin (manufactured by Sigma-Aldrich Co. LLC, lignin, alkali (product number 370959))

### Lignin component (A-7): PEG-modified lignin

A PEG-modified lignin (lignin modified with polyethylene glycol) was prepared in the following method.

First, 100 parts by mass of polyethylene glycol having a number average molecular weight of 400 and 0.3 parts by mass of sulfuric acid as an acid catalyst were added to a reaction vessel, and they were stirred. Subsequently, 20 parts by mass of a bone-dry wood powder was added to the reaction vessel, and they were heated and stirred at 140°C under normal pressure for 90 minutes. And then the reaction vessel was cooled, 120 parts by mass of sodium hydroxide (0.2 mol/L) was added thereto, and they were stirred. Next, the obtained solid components were removed using filtration to recover the solution component. Subsequently, sulfuric acid was added to the resulting solution component to adjust pH to 2.0. The resulting suspension thereof was subjected to centrifugation to recover the PEG-modified lignin. As a result, PEG-modified lignin (lignin component (A-7)) was obtained.

### [Evaluation method]

The following items were evaluated for the lignin components (A-1) to (A-7).

### (1) Amount of phenol

The amount of phenol was measured using high performance liquid chromatography (HPLC). Specifically, 50 mg of each sample of the lignin components (A-1) to (A-7) was dissolved in 0.5 mL of tetrahydrofuran. 4.5 mL of a mixed solvent of 4/1 (volume ratio) of water/acetonitrile was added thereto, they were stirred for 30 minutes, and then the supernatant thereof was filtered to prepare a measurement sample. 1 µL of the measurement sample was injected into "ACQUITY UPLC H-CLASS" to which BEH C18 (1.7 µm × 2.1 mm × 50 mm) column was connected. The column temperature was set at 40°C, and a mixed solvent of 2 mM of aqueous solution of ammonium acetate (A) and acetonitrile (B) was used as a mobile phase. A gradient method in which the flow rate ratio (A:B) was gradually changed from 80:20 to 10:90 was used, and the measurement was conducted using an ultraviolet-visible spectrum (UV) detector 280 nm as a detector. The amount of the phenol in the sample was calculated using a calibration curve of a standard phenol solution separately prepared.

### (2) Dimer component (compound represented by formula (1) and compound (2))

The amount of a dimer component (phenol dimer and compound (2)) was measured using liquid chromatography and mass spectrometry (LC/MS). Specifically, 50 mg of each sample of the lignin components (A-1) to (A-7) were dissolved in 0.5 mL of tetrahydrofuran. 4.5 mL of a mixed solvent of 4/1 (volume ratio) of water/acetonitrile was added thereto, they were stirred for 30 minutes, and then the supernatant thereof was filtered to prepare a measurement sample. 1 µL of the measurement sample was injected into an LC-MS system mounting "ACQUITY UPLC H-CLASS" to which BEH C18 (1.7 µm × 2.1 mm × 50 mm) column was connected as a separated unit and "Xevo G2-XS QTof" as a detection unit. The column temperature was set at 40°C, and a mixed solvent of 2 mM of aqueous solution of ammonium acetate (A) and acetonitrile (B) was used as a mobile phase. A gradient method in which the flow rate ratio (A:B) was gradually changed from 80:20 to 10:90 was used to separate the dimer component.

The resulting dimer component was ionized by using an electrospray, and then it was subjected to the measurement using a quadrupole time-of-flight mass spectrometer with negative mode over the ratio of mass to charge in the range of 50 to 1,000.

Assuming that all of the compounds were detected as the deprotonated form, the structure of the dimer component included in the sample was determined as the following compounds (a) to (h) and the compound (2) from the ratio of mass to charge. The chromatogram was extracted with the ratio of mass to charge corresponding to the structure of each compound to calculate the peak area.

The amount of the phenol dimer component in the sample was calculated using a calibration curve of a standard 2,2'-dihydroxydiphenylmethane solution separately prepared.

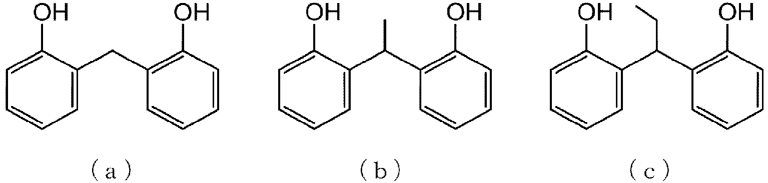

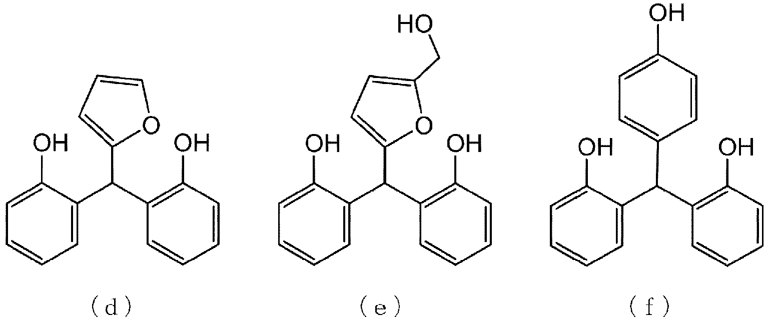

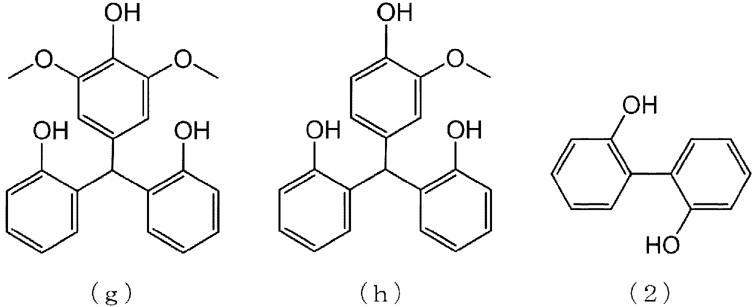

### (3) GPC measurement of lignin component

The number average molecular weight Mn, the weight average molecular weight Mw, the Z-average molecular weight Mz and the molecular weight distribution (Mw/Mn) were measured by gel permeation chromatography (GPC). Specifically, each sample of the lignin components (A-1) to (A-7) was dissolved in tetrahydrofuran to prepare a measurement sample. 100 µL of the measurement sample was injected into a GPC system "HLC-8220GPC (manufactured by Tosoh Corporation)" or "HLC-8420GPC (manufactured by Tosoh Corporation)" in which two "TSKgelGMHXL (manufactured by Tosoh Corporation)" and one "G2000HXL (manufactured by Tosoh Corporation)" which are organic general-purpose columns filled with a styrene-based polymer filler were connected in series, and tetrahydrofuran was developed as an eluent at 1.0 mL/min and 40°C to measure the retention time using a differential refractive index (RI).

Each average molecular weight in the sample was calculated using a calibration curve showing the relationship between the retention time and the molecular weight of a standard polystyrene separately prepared.

Some insoluble components were generated in tetrahydrofuran for the kraft lignin of the lignin component (A-6) and the PEG-modified lignin of the lignin component (A-7), and therefore, the soluble components therein were only analyzed as a target.

The following items (a) to (d) were calculated from molecular weight charts of the samples obtained by GPC.

### (a) Maximum value of peak of molecular weight LogM in molecular weight LogM2.35 to 2.60 (molecular weight LogM2.35 to 2.60 peak)

The value of the molecular weight LogM indicating the maximum value of peak of a differential distribution value (dw/dLogM) was used as the term "molecular weight LogM2.35 to 2.60 peak" in the molecular weight LogM2.35 to 2.60 of a chart (in which dw/dLogM was plotted on y-axis, and LogM was plotted on x-axis) of the molecular weight of the sample obtained by GPC.

### (b) Maximum value of differential distribution value (dw/dLogM)

The maximum value of peak of the differential distribution value (dw/dLogM) present in the molecular weight LogM2.35 to 2.60 was used as the term "maximum value of differential distribution value (dw/dLogM)" in the chart (in which dw/dLogM was plotted on y-axis, and LogM was plotted on x-axis) of the molecular weight of the sample obtained by GPC.

### (c) Integral distribution value (%) in molecular weight LogM2.35 and integral distribution value (%) in molecular weight LogM2.55

The integral distribution value (%) in the molecular weight LogM2.35, and the integral distribution value (%) in the molecular weight LogM2.55 were each used as the term "integral distribution value in molecular weight LogM2.35", and the term "integral distribution value in molecular weight LogM2.55" in a chart (in which the integral distribution value (%) was plotted on y-axis, and LogM was plotted on x-axis) of the molecular weight of the sample obtained by GPC.

### (d) Integral distribution value (%) 2.55 to 2.35

The value of the difference obtained by subtracting the integral distribution value (%) of the molecular weight LogM2.35 from the integrated distribution value (%) of the molecular weight LogM2.55 was used as "integral distribution value (%) 2.55 to 2.35".

### (4) Amount of functional group

A solvent obtained by mixing deuterochloroform, pyridine and cyclohexanol (internal standard) was added to the lignin derivative obtained in each Example or a raw material (solid sample). In addition, 2-chloro-4,4,5,5-tetramethyl-1,3,2-dioxaphospholane was further added thereto as a derivative reagent, and they were heated at 50°C for an hour. And then, ³¹P-NMR measurement was conducted under the following measurement conditions.

The kraft lignin of the lignin component (A-6) and the PEG-modified lignin of the lignin component (A-7) are not completely dissolved in the solvent, and therefore, the soluble components thereof were only measured.

### <³¹P-NMR measurement>

The measuring apparatus and conditions are as follows.
· Pulse width: 30°
· Repetition time: 2 seconds
· Measuring range: -60 to 200 ppm
· Number of integrations: 200 times

A signal derived from cyclohexanol being an internal standard was used as 145.2 ppm. 150.0 to 145.5 ppm was identified as an alcoholic hydroxy group, 144.7 to 136.6 ppm was identified as a phenolic hydroxy group, and 136.6 to 133.6 ppm was identified as a carboxyl group. The amount of the alcoholic hydroxy group (mmol/g), the amount of the phenolic hydroxy group (mmol/g), and the amount of the carboxyl group (mmol/g) were calculated from the integration curve.

Further, the total amount of the alcoholic hydroxy group and the carboxyl group, and the ratio of the amount of the phenolic hydroxy group to the amount of the alcoholic hydroxy group (the amount of the phenolic hydroxy group / the amount of the alcoholic hydroxy group) were calculated based on the measurement results described above.

### (5) Physical property (measurement of softening point)

The sample (lignin component) was ground in a mortar, and 10 to 20 mg of the ground sample was added to an aluminum cup (circular, upper diameter of 60 mm, lower diameter 53 mm, and depth 15 mm). The aluminum cup with the sample was placed on a hot plate (IKA C-MAG HP7), and it was covered with aluminum foil. It was heated to 100°C, and then the temperature thereof was increased every by 10°C. It was visually observed, and the temperature in which it was visually dissolved was used as the softening point thereof. As a result, the softening points (°C) of the lignin components (A-1) to (A-7) were measured.

The above-described results are shown in Table 1.

**Table 1**

| | | Production Example 1 lignin component (A-1) | Production Example 2 lignin component (A-2) | Production Example 3 lignin component (A-3) | Production Example 4 lignin component (A-4) | Production Example 5 lignin component (A-5) | lignin component (A-6) | lignin component (A-7) |
|---|---|---|---|---|---|---|---|---|
| | Compound (a) | 0.120 | 0.210 | 0.005 | 0.870 | 0.320 | <0.001 | <0.001 |
| | Compound (b) | 0.400 | 0.484 | 0.100 | 0.042 | 0.320 | <0.001 | <0.001 |
| | Compound (c) | 0.064 | 0.024 | <0.001 | 0.003 | 0.070 | <0.001 | <0.001 |
| | Compound (d) | 0.011 | 0.016 | 0.005 | 0.057 | 0.140 | 0.001 | <0.001 |
| Composition (amount [% by mass]) | Compound (e) | 0.010 | 0.005 | 0.007 | 0.130 | 0.053 | 0.003 | 0.001 |
| | Compound (f) | 0.053 | 0.079 | 0.003 | 0.370 | 0.160 | 0.000 | <0.001 |
| | Compound (g) | 0.022 | 0.024 | 0.003 | 0.024 | 0.065 | 0.046 | <0.001 |
| | Compound (h) | 0.025 | 0.027 | 0.002 | 0.035 | 0.034 | 0.008 | <0.001 |
| | Total amont of compounds (a) to (h) | 0.705 | 0.869 | 0.125 | 1.531 | 1.162 | 0.059 | 0.001 |
| | Compound (2) | 0.006 | 0.002 | <0.001 | 0.008 | 0.012 | <0.001 | <0.001 |
| | Free phenol monomer | 0.90 | 4.3 | 1.300 | 3.300 | 0.90 | 0.03 | 0.02 |
| | Lignin | 98.4 | 94.8 | 98.6 | 95.2 | 97.9 | 99.9 | 100.0 |
| | Mn | 760 | 750 | 836 | 660 | 581 | 1077 | 1496 |
| | Mw | 1900 | 2120 | 1976 | 1652 | 1320 | 2279 | 3564 |
| | Mz | 4211 | 5385 | 4446 | 4129 | 3011 | 4301 | 5384 |
| | Mw/Mn | 2.50 | 2.83 | 2.36 | 2.50 | 2.27 | 2.12 | 2.38 |
| | Molecular weight LogM2.35 to 2.60 peak | 2.5 | 2.5 | 2.4 | 2.4 | 2.6 | 2.5 | 2.5 |
| Molecular weight | Maximum value of differential distribution value (dw/dLogM) | 81.8 | 108.2 | 33.2 | 91.0 | 94.8 | 48.5 | 22.0 |
| | Integral distribution value [%] in molecular weight LogM2.35 | 1.5 | 1.5 | 2.1 | 2.2 | 5.0 | 0.2 | 1.0 |
| | Integral distribution value [%] in molecular weight LogM2.55 | 12.5 | 15.5 | 8.6 | 16.2 | 20.6 | 5.1 | 4.4 |
| | Integral distribution value [%] 2.55 to 2.35 | 11.0 | 14.0 | 6.5 | 14.0 | 15.6 | 4.9 | 3.5 |
| Amount of functional group | Alcoholic hydroxy group (m) [mmol/g] | 0.48 | 0.66 | 1.21 | 0.56 | 0.51 | 2.17 | 1.53 |
| | Phenolic hydroxy group (n) [mmol/g] | 4.73 | 4.49 | 3.67 | 5.62 | 4.98 | 4.96 | 2.15 |
| | Carboxyl group (o) [mmol/g] | 0.28 | 0.33 | 0.30 | 0.14 | 0.24 | 0.53 | 0.14 |
| | m+o [mmol/g] | 0.76 | 0.99 | 1.51 | 0.7 | 0.75 | 2.70 | 1.67 |
| | n/m [-] | 9.9 | 6.8 | 3.0 | 10.0 | 9.8 | 2.3 | 1.4 |
| Physical property | Softening point [°C] | 140 to 150 | 120 to 130 | 125 to 135 | 115 to 125 | 100 to 110 | >300 | 165 to 175 |

The amount of the "lignin" shown in Table 1 is a value (the proportion of the amount of the "lignin" to the "total amount of the lignin component") calculated by assuming that all of the components other than the phenol dimer (compounds (a) to (h)), the compound (2) and a free phenol monomer among the components included in the lignin component are regarded as the "lignin". In other words, the expression "the total amount of the lignin component" indicates the total amount of the phenol dimer (compounds (a) to (h)), the compound (2), the free phenol monomer and the lignin.

In addition, the term "total amount of compounds (a) to (h)" in Table 1 indicates the proportion in which the total amount of the compound represented by the formula (1) is occupied in the total amount of the lignin component (the proportion of the total amount of the compound represented by the formula (1) to the "total amount of the lignin component").

### 2. Preparation of resin composition

### (Examples 1 to 11 and Comparative Examples 1 to 4)

The lignin component (A) and the thermoplastic resin (B) were melt-kneaded in the formulation (composition) shown in Table 2 at 250°C using a twin-screw kneader (manufactured by Thermo Fisher Scientific Inc., Process 11) having the cylinder diameter of 11 mm to obtain resin compositions (C-1) to (C-15).

Here, the lignin components (A-1) to (A-7) described above were used as the lignin component (A). Further, the following thermoplastic resins (B-1) and (B-2) were used as the thermoplastic resin (B).
Thermoplastic resin (B-1): PA6 (manufactured by UBE Corporation, UBE nylon 1022B)
Thermoplastic resin (B-2): PA610 (manufactured by Evonik Industries AG, VESTAMID Terra HS16)

### [Evaluation method]

The following items were evaluated for the resin compositions (C-1) to (C-15).

### (1) Moldability (melt-kneading property)

When strands extruded from the twin-screw kneader were able to be stably obtained for 10 minutes and when the pressure of the resin composition was within ±50% before and after the start of melt-kneading, it was evaluated as "○". When these conditions were not satisfied, or when the melt-kneaded product was gelled, it was evaluated as "×".

### (2) Mechanical properties

### (2-1) Tensile strength and elongation at break

The resin composition with pellet shape was injection-molded using an injection-molding machine (manufactured by Thermo Fisher Scientific Inc., MiniJetPro) at the cylinder temperature of 250°C and the mold temperature of 90°C to obtain a tensile test piece (having the thickness of 2 mm). ISO527-2-5A manufactured by Thermo Fisher Scientific Inc. was used as the mold. The tensile properties were measured for the tensile test piece obtained above according to ISO 527. Specifically, the tensile strength (MPa) and the elongation at break (%) were measured under the conditions of the chucking distance of 5cm, the temperature of 23°C, and the tensile rate of 20 mm/min. A higher value indicates better tensile properties.

### (2-2) Flexural modulus and flexural strength

The resin composition with pellet shape was injection-molded using an injection-molding machine (manufactured by Thermo Fisher Scientific Inc., MiniJetPro) at the cylinder temperature of 250°C and the mold temperature of 90°C to obtain a flexural test piece (having the thickness of 2 mm). ISO527-2-5A manufactured by Thermo Fisher Scientific Inc. was used as the mold. The flexural properties were measured for the flexural test piece obtained above according to ISO 178:2010. Specifically, the flexural strength (MPa) and the flexural modulus (GPa) were measured under the conditions of the distance between fulcrums of 5 cm, the temperature of 23°C, and the flexural rate of 3 mm/min. A higher value indicates better flexural properties.

The above-described results are shown in Table 2.

**Table 2**

| | | | | Example 1 | Example 2 | Example 3 | Example 4 | Example 5 | Example 6 | Example 7 | Example 8 | Comparative Example 1 | Comparative Example 2 | Comparative Example 3 |
|---|---|---|---|---|---|---|---|---|---|---|---|---|---|---|
| Resin composition (C) | | | | C-1 | C-2 | C-3 | C-4 | C-7 | C-8 | C-9 | C-10 | C-12 | C-14 | C-15 |
| Composition | Lignin composition (A) | | Type | A-1 | A-1 | A-1 | A-1 | A-2 | A-3 | A-4 | A-5 | - | A-6 | A-7 |
| | | | Parts by mass | 10 | 20 | 30 | 40 | 20 | 20 | 20 | 20 | - | 20 | 20 |
| | Thermoplastic resin (B) | | Type | B-1 | B-1 | B-1 | B-1 | B-1 | B-1 | B-1 | B-1 | B-1 | B-1 | B-1 |
| | | | Parts by mass | 90 | 80 | 70 | 60 | 80 | 80 | 80 | 80 | 100 | 80 | 80 |
| Moldability | Melt-kneading property | | - | ○ | ○ | ○ | ○ | ○ | ○ | ○ | ○ | ○ | × (Gelation) | × (Gelation) |
| Mechanical properties | Tensile | Strength | MPa | 83 | 87 | 90 | 83 | 81 | 78 | 84 | 88 | 72 | - | - |
| | | Elongation at break | % | >100 | >100 | 5.5 | 2.9 | 14 | >100 | 50 | >100 | >100 | - | - |
| | Flexural | Modulus | GPa | 3.0 | 3.1 | 3.5 | 3.7 | 2.8 | 2.9 | 3 | 2.9 | 2.6 | - | - |
| | | Strength | % | 94 | 100 | 106 | 106 | 113 | 114 | 120 | 114 | 83 | - | - |

| | | | | Example 9 | Example 10 | Example 11 | Comparative Example 4 |
|---|---|---|---|---|---|---|---|
| Resin composition (C) | | | | C-5 | C-6 | C-11 | C-13 |
| Composition | Lignin composition (A) | | Type | A-1 | A-1 | A-5 | - |
| | | | Parts by mass | 20 | 30 | 20 | - |
| | Thermoplastic resin (B) | | Type | B-2 | B-2 | B-2 | B-2 |
| | | | Parts by mass | 80 | 70 | 80 | 100 |
| Moldability | Melt-kneading property | | - | ○ | ○ | ○ | ○ |
| Mechanical properties | Tensile | Strength | MPa | 72 | 72 | 70 | 49 |
| | | Elongation at break | % | >100 | >100 | >100 | >100 |
| | Flexural | Modulus | GPa | 2.3 | 2.6 | 2.4 | 1.8 |
| | | Strength | % | 65 | 77 | 100 | 51 |

### [Evaluation]

As can be seen from Table 2, it was found that the resin compositions (C-1) to (C-11) exhibited excellent moldability and mechanical properties in Examples 1 to 11.

### 3. Preparation of fiber-reinforced resin composition

### (Examples 12 to 19 and Comparative Examples 5 to 8)

The resin composition (C) and a reinforced fiber (D) were melt-kneaded in the formulation (composition) shown in Table 3 at 250°C using the twin-screw kneader (manufactured by Thermo Fisher Scientific Inc., Process 11) having the cylinder diameter of 11 mm to obtain fiber-reinforced resin compositions (E-1) to (E-12).

Here, the lignin components (C-1) to (C-6), (C-12) and (C-13) described above were used as the resin composition (C). Further, the following reinforced fibers (D-1) and (D-2) were used as the reinforced fiber (D).
Reinforced fiber (D-1): carbon fiber (manufactured by Mitsubishi Chemical Corporation, PYROFIL TR066A)
Reinforced fiber (D-2): glass fiber (manufactured by Nippon Electric Glass Co., Ltd., E glass fiber chopped strand T-249H)

### [Evaluation method]

The fiber-reinforced resin compositions (E-1) to (E-12) were evaluated in the same manner as in the resin compositions (C-1) to (C-15). Provided that measurement of the tensile elongation at break was omitted.

The results are shown in Table 3.

**Table 3**

| | | | | Example 12 | Example 13 | Example 14 | Example 15 | Example 16 | Example 17 | Example 18 | Example 19 |
|---|---|---|---|---|---|---|---|---|---|---|---|
| Fiber-reinforced resin composition (E) | | | | E-1 | E-2 | E-3 | E-4 | E-5 | E-6 | E-7 | E-8 |
| Composition | Resin composition (C) | | Type | C-1 | C-2 | C-3 | C-4 | C-2 | C-5 | C-6 | C-5 |
| | | | Parts by mass | 70 | 70 | 70 | 70 | 70 | 70 | 70 | 70 |
| | Reinforced fiber (D) | | Type | D-1 | D-1 | D-1 | D-1 | D-2 | D-1 | D-1 | D-2 |
| | | | Parts by mass | 30 | 30 | 30 | 30 | 30 | 30 | 30 | 30 |
| Moldability | Melt-kneading property | | - | ○ | ○ | ○ | ○ | ○ | ○ | ○ | ○ |
| Mechanical properties | Tensile | Strength | MPa | 200 | 209 | 205 | 197 | 159 | 213 | 202 | 154 |
| | Flexural | Modulus | GPa | 20.0 | 21.6 | 22.1 | 23.5 | 9.8 | 22.0 | 22.9 | 8.8 |
| | | Strength | MPa | 290 | 291 | 288 | 274 | 205 | 289 | 281 | 201 |

| | | | | Comparative Example 5 | Comparative Example 6 | Comparative Example 7 | Comparative Example 8 |
|---|---|---|---|---|---|---|---|
| Fiber-reinforced resin composition (E) | | | | E-9 | E-10 | E-11 | E-12 |
| Composition | Resin composition (C) | | Type | C-12 | C-12 | C-13 | C-13 |
| | | | Parts by mass | 70 | 70 | 70 | 70 |
| | Reinforced fiber (D) | | Type | D-1 | D-2 | D-1 | D-2 |
| | | | Parts by mass | 30 | 30 | 30 | 30 |
| Moldability | Melt-kneading property | | - | ○ | ○ | ○ | ○ |
| Mechanical properties | Tensile | Strength | MPa | 200 | 162 | 195 | 138 |
| | Flexural | Modulus | GPa | 19.1 | 9.0 | 20.2 | 7.7 |
| | | Strength | MPa | 279 | 204 | 268 | 169 |

### [Evaluation]

As can be seen from Table 3, it was found that the fiber-reinforced resin compositions (E-1) to (E-8) exhibited excellent moldability and mechanical properties in Examples 12 to 19. In addition, it was found that the fiber-reinforced resin compositions (E-1) to (E-8) included the lignin compositions in Examples 12 to 19, thereby being able to reduce the amount of the resin used, and they exhibited comparable or no-largely-inferior properties as compared to the fiber-reinforced resin compositions (E-9) to (E-12) which did not include the lignin compositions in Comparative Examples 5 to 8.

Although only some exemplary embodiments and/or examples of this invention have been described in detail above, those skilled in the art will readily appreciate that many modifications are possible in the exemplary embodiments and/or examples without materially departing from the novel teachings and advantages of this invention. Accordingly, all such modifications are intended to be included within the scope of this invention.

The documents described in the specification and the specification of Japanese application(s) on the basis of which the present application claims Paris convention priority are incorporated herein by reference in its entirety.

## Claims

1. A resin composition comprising a lignin component (A) having an alcoholic hydroxy group with the amount thereof of 1.5 mmol/g or less, and a thermoplastic resin (B),
wherein the amount of the lignin component (A) is 1 to 60% by mass, and
the amount of the thermoplastic resin (B) is 40 to 99% by mass.

2. The resin composition according to claim 1, wherein the total amount of the alcoholic hydroxy group and a carboxyl group of the lignin component (A) is 1.6 mmol/g or less.

3. The resin composition according to claim 1 or 2, wherein the amount of a phenolic hydroxy group of the lignin component (A) is 2.5 mmol/g or more, and the ratio of the amount of the phenolic hydroxy group to the amount of the alcoholic hydroxy group (the amount of the phenolic hydroxy group/the amount of the alcoholic hydroxy group) is 2.5 or more.

4. The resin composition according to any one of claims 1 to 3, wherein the weight average molecular weight (Mw) of the lignin component (A) is 1,000 to 3,500.

5. The resin composition according to any one of claims 1 to 4, wherein the softening point of the lignin component (A) is 100°C or more and less than 250°C.

6. The resin composition according to any one of claims 1 to 5, wherein the lignin component (A) comprises two or more compounds represented by the following formula (1), and the total amount of the compounds represented by the formula (1) is 0.06% by mass or more based on the total amount of the lignin component (A): 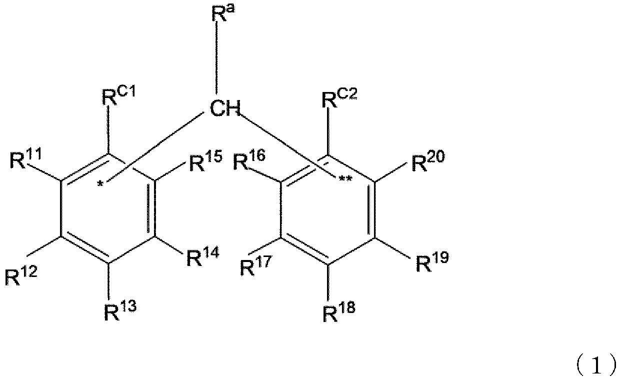
wherein in the formula, * is bonded with the carbon atom in which any of R¹¹ to R¹⁵ is substituted and which is on the ring, and ** is bonded with the carbon atom in which any of R¹⁶ to R²⁰ is substituted and
which is on the ring; R^{a} is a hydrogen atom, a methyl group, an ethyl group, a furyl group, a hydroxymethylfuryl group, a hydroxyphenyl group, a hydroxymethoxyphenyl group or a hydroxydimethoxyphenyl group; R^{c1} and R^{c2} are independently a hydroxy group, an alkoxy group, an amino group or a thiol group; R¹¹ to R²⁰ which do not bond with * or ** are independently a hydrogen atom, a hydroxy group, a hydrocarbon group having 1 to 15 carbon atoms, a hydrocarbon ether group having 1 to 15 carbon atoms, or a group containing a carbonyl group; R¹¹ to R²⁰ may be the same as or different from each other; provided that at least one of R¹¹ to R¹⁵ is a hydrogen atom, and at least one of R¹⁶ to R²⁰ is a hydrogen atom.

7. The resin composition according to any one of claims 1 to 6, wherein the maximum value of peak of a differential distribution value (dw/dLogM) present in a molecular weight LogM2.35 to 2.60 of the lignin component (A) as measured by gel permeation chromatography (GPC) is 50 or more and 150 or less, or a difference of an integral distribution value (%) in the molecular weight LogM2.35 to 2.55 thereof is 5 or more and 15 or less.

8. The resin composition according to any one of claims 1 to 7, wherein the thermoplastic resin (B) comprises a condensation polymerization polymer.

9. The resin composition according to any one of claims 1 to 8, wherein the thermoplastic resin (B) comprises one or more members selected from the group consisting of a polyamide resin, a polyester resin and a polycarbonate resin.

10. A fiber-reinforced resin composition comprising the resin composition according to any one of claims 1 to 9, and a reinforced fiber (D).

11. The fiber-reinforced resin composition according to claim 10, wherein the reinforced fiber (D) comprises one or more members selected from the group consisting of a carbon fiber, a glass fiber, an aramid fiber and a cellulose fiber.

12. A molded body comprising the resin composition according to any one of claims 1 to 9, or the fiber-reinforced resin composition according to claim 10 or 11.

13. The molded body according to claim 12, which is an injection-molded body.

14. The molded body according to claim 12, which is an extrusion-molded body.

15. The molded body according to claim 12, which is a press-molded body.
